# EUROPEAN PATENT SPECIFICATION

(11) **EP 0 592 694 B1**
(45) Date of publication and mention of the grant of the patent: **27.12.1996**
(21) Application number: 92117087.4
(22) Date of filing: 07.10.1992
(51) Int. Cl.: B23C 5/26, B23D 59/00, B27B 5/36

(54) **Toolholder for an adjustable circular milling cutter**
Werkzeughalter für einen ringförmigen einstellbaren Fräser
Porte-outil pour un fraise circulaire ajustable

(43) Date of publication of application: 20.04.1994
(73) Proprietor: METAL WORLD s.n.c. di PAVIOTTI & C., IT-33050 Pavia di Udine (UD) (IT)
(72) Inventor: Paviotti, Enzo, I-33050 Pavia Di Udine (IT)
(74) Representative: D'Agostini, Giovanni, Dr.

(56) References cited:
- EP-A- 0 265 621
- CH-A- 391 431
- GB-A- 2 014 066

## Description

This invention concerns a toolholder for an adjustable circular milling cutter in which it is possible to register the position of the milling cutter on the plane, orthogonal to the rotating axis according to the precharacterising portion of claim 1.

This solution is conveniently applicable in the sector of working with wood, plastic and similar materials.
However, the system may be utilized for working with other materials.

It is known in prior art that it is necessary to give the rotary milling cutter an exact orthogonal position compared to the rotating axis, since there exists a certain play that does not allow a perfect placement in such a sense.
For this purpose in the prior art there are toolholders that provide the possibility to register the position of the tool in order to confer to it an exact placement on a plane, orthogonal to the rotation axis.
These toolholders realize such a regulation by means of regulating screws which are parallel to the rotation axis associated by means of blockage screws, orthogonal to the rotation axis and preferably radial, operating on a respective support compass for the support of the milling cutter on the corresponding side of the toolholder.

A similar system using regulating screws which are parallel to the rotation axis but are not associated to it by means of orthogonal blockage screws is disclosed in CH-A-391 431 (SCHIESS A.G.).
Another solution is disclosed in GB-A-2 014 066 (R. KOHLERT), which discloses a different way to regulate the position of the tool. GB-A-2 014 066 (R. KOHLERT) discloses a workpiece support mandrel with a base member, which has a partially spherical surface (spherical segment) clamped around the rotational axis. Said spherical surface is in contact with a conical surface of a co-axial ring, said ring being adjustable in its co-axial position by means of peripheral adjustment screws. The regulation of orientatin of said base member is done by several screws which are disposed parallel to said rotational axis and are arranged on the circumference in order to allow more or less tightening by forcing said screws, obliging said base member to take a correct alignment.
In other words, both these solutions for regulation of the base member toolholder, use the same system, namely, screws that are parallel to the rotation axis. The only difference between these two solutions is that in the second solution it is possible to realise an alignment of the axis by said peripheral adjustment screws that are radially inclined to move the conical ring seat into the correct central position.

Drawbacks of this system derive substantially from the fact that a precise regulation cannot be carried out and furthermore, considering that such tools rotate with a very high speed (e.g. 6000 r.p.m.) it is easy, with the vibrations and stresses, for loosenings to occur.
Another drawback derives furthermore in that in said toolholder there are no means such as to consent an eventual further re-balancing of the machine, being as known, that even if tools and toolholders can be perfectly balanced in the factory, after assembly, problems of a further re-balancing of the entire rotary mass always exist, consequently in the absence thereof, vibrations compromising the efficiency of the ensemble occur.

The aim of this invention is to obviate said drawbacks.
This and other aims are reached with this invention as claimed in claim 1, by means of a toolholder for circular milling cutters of a flange type with a shoulder to hold a circular milling cutter, involving annular spacer means for support of the circular milling cutter, adjustable, movable and fixable in a certain position on a plane, orthogonal to the rotation axis, associated by means of fixation in a regulated position of the milling cutter on said toolholder, characterized in that the support plane on the shoulder of said flange in the toolholder, provides a radially movable cuneiform registration means by means of radial screws, for displacing micrometrically at least one part of said annular support means.

With this solution we obtain the advantage of a micrometric, precise and absolutely secure regulation by means of a wedge system rather than by direct screwing.
Advantageously said annular, spacer support means of the milling cutter have a support surface for the conical toolholder to be associated to the surface of said cuneiform registration means, in order that both support surfaces have an inclined plane for reciprocal slipping, making wherewith possible a better regulation.
Also advantageously, the toolholder has an annular groove on an external orthogonal surface to hold some screw anchors as a balancing means.

The invention is better understood with the following description and drawings that are supplied for example only, in which:

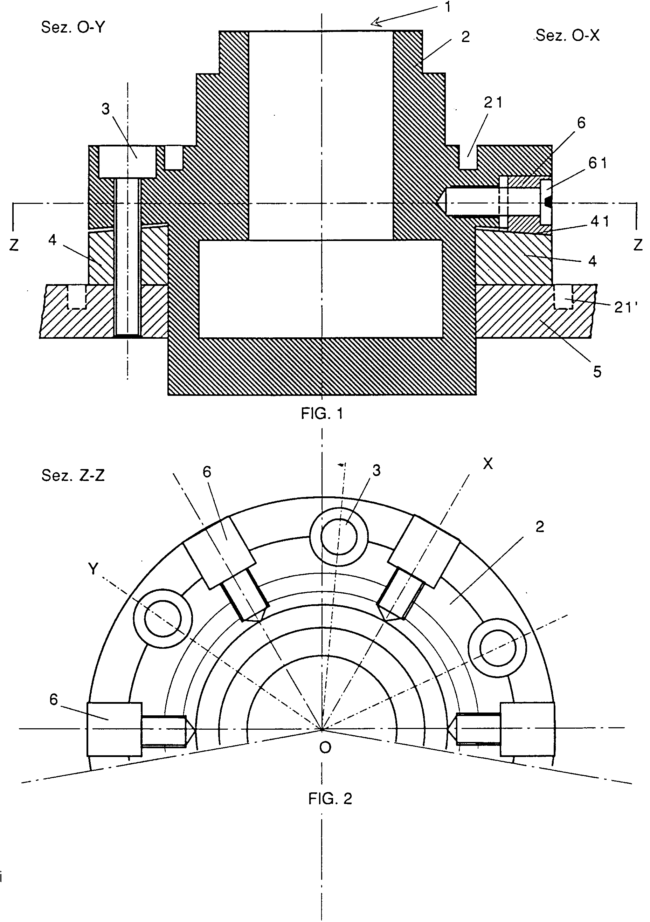

Figure 1 represents a schematic view of the toolholder, annular spacer means and of the respective mounted milling cutter, in a partial axial section on two respective planes:
   - O-X in one of the axes of the radial screws of the micrometric cuneiform regulation device, on the orthogonal plane and,
   - O-Y in one of the axes coinciding with one of the clamping screws of the toolholder, spacer ring and milling cutter ensemble.
Figure 2 represents a schematic sectional view on the transversal plane Z-Z, of only the toolholder in which are shown the positions of both the longitudinal fixation holes of the milling cutter and of the regulation micrometric seats of cuneiform screw anchors.

Referring to the figures it is disclosed that the toolholder is indicated with the number 2.
It has an axial hole for motor shaft 1, a shoulder to house milling cutter 5 by means of a spacer support ring 4 of which internal surface, towards the shoulder is conical.
On the support surface of the toolholders there are some reception seats for conical screw anchors (6) that can be registered radially by means of regulation screw 61 in order to displace, radially and micrometrically, determined points of the surface of the spacer ring and thus bring the milling cutter 5, on a perfectly orthogonal plane.
Everything is clamped by means of the adjacent longitudinal screws 3.

In the indicated solution the number of registration seats and blockage screws is six and they are distributed radially but it is evident that their position and number can change.

It is disclosed furthermore that on the internal surface of the flanging of the toolholder, an annular groove 21 is made destined to hold balancing anchor screws that can be fixed in any annular position and in a variable number.

## Claims

1. A toolholder (2) for circular milling cutters of the flange type with a shoulder to hold a circular milling cutter, involving an annular spacer means (4) of support of the circular milling cutter (5), adjustable, movable and fixable in a certain position on a plane, orthogonal to the rotation axis, associated with fixation means (3) in the regulated position of the milling cutter (5) on said toolholder (2), characterized in that the support plane on the shoulder of said flange in said toolholder (2), provides a radially movable cuneiform registration means (6) by means of radial screws (61), for displacing micrometrically at least one part of said annular support means (4).

2. A toolholder according to claim 1, characterized in that said annular means support spacers of the milling cutter (4) have a support surface for the conic toolholder to associate to the surface of said cuneiform registration means (6), in order that both support surfaces have an inclined plane with reciprocal slipping.

3. A toolholder according to claim 1, characterized in that it has an annular groove (21) on an external orthogonal surface to hold some screw anchors as a balancing means.

4. A toolholder according to claim 1, characterized in that it has an annular groove (21) on an external orthogonal surface on the tang side to hold some anchor screws as a balancing means.

5. A toolholder according to claim 1, characterized in that said blockage means of the ensemble consist in the screws (3) which dispose the screwing heads on the tang side.

## Patentansprüche

1. Klemmhalter (2) für Rundfräser mit Flansch mit einer Schulter zum Halten eines Rundfräsers, unter Zuhilfenahme eines ringförmigen Distanzstücks (4) als Stütze für den Rundfräser (5), regulierbar, beweglich und in einer gewissen Position auf einer Ebene anzubringen, rechtwinklig zur Rotationsachse, mit Befestigungsmitteln (3) in der eingestellten Position des Fräsers (5) auf besagtem Klemmhalter (2) angebracht, gekennzeichnet dadurch, daß die Auflageebene auf der Schulter der Flansch in dem genannten Klemmhalter (2) einen mittels radialer Schrauben (61) radial beweglichen keilförmigen Passer (6) vorsieht, zum mikrometrischen Versetzen mindestens eines Teils des besagten ringförmigen Stützmittels (4).

2. Klemmhalter nach Anspruch 1, gekennzeichnet dadurch, daß die besagten ringförmigen Auflagedistanzstücke des Fräsers (4) eine Auflageoberfläche haben, um den konischen Klemmhalter mit der Oberfläche des besagten keilförmigen Passers (6) zu verbinden, damit beide Auflageoberflächen eine geneigte Ebene mit gegenseitigem Rutscheffekt haben.

3. Klemmhalter nach Anspruch 1, gekennzeichnet dadurch, daß er eine ringförmige Rille (21) auf einer äußeren rechtwinkligen Oberfläche aufweist, um einige Schraubenanker als Balanciermittel zu halten.

4. Klemmhalter nach Anspruch 1, gekennzeichnet dadurch, daß er eine ringförmige Rille (21) auf einer äußeren rechtwinkligen Oberfläche auf der Heftzapfenseite aufweist, um einige Ankerschrauben als Balanciermittel zu halten.

5. Klemmhalter nach Anspruch 1, gekennzeichnet dadurch, daß die besagten Absperrungsmittel des Ganzen aus den Schrauben (3) bestehen, die die Schraubköpfe auf der Heftzapfenseite anordnen.

## Revendications

1. Porte-outils (2) pour fraiseuses circulaires du type à bride avec une épaule pour tenir une fraiseuse circulaire, avec une pièce d'écartement annulaire (4) de support de la fraiseuse circulaire (5), ajustable, mobile et fixable dans une certaine position sur un plan, orthogonal à l'axe de rotation, associée avec des moyens de fixation (3) dans la position réglée de la fraiseuse (5) sur ledit porte-outils (2), caractérisé en ce que le plan de support sur l'épaule de ladite bride dans ledit porte-outils (2) pourvoit un moyen de repère cunéiforme radialement mobile (6) moyennant des vis radiales (61), pour déplacer de façon micrometrique au moins une partie des dits moyens de support annulaires (4).

2. Porte-outils selon la revendication 1, caractérisé en ce que lesdits moyens annulaires de support pour les pièces d'écartement de la fraiseuse (4) ont une surface de support pour le porte-outils conique qui est à associer à la surface dudit moyen de repère cunéiforme (6), afin que les deux surfaces de support aient un plan incliné avec glissement réciproque.

3. Porte-outils selon la revendication 1, caractérisé en ce qu'il présente une rainure annulaire (21) sur une surface orthogonale externe pour tenir quelques ancres à vis en qualité de moyens d'équilibrage.

4. Porte-outils selon la revendication 1, caractérisé en ce qu'il présente une rainure annulaire (21) sur une surface orthogonale externe sur le côté de queue pour tenir quelques vis d'ancre en qualité de moyen d'équilibrage.

5. Porte-outils selon la revendication 1, caractérisé en ce que lesdits moyens de blocage de l'ensemble consistent dans les vis (3) lesquelles disposent les têtes de vissage sur le côté de queue.
